# EUROPEAN PATENT APPLICATION

(11) **EP 1 835 143 A1**
(43) Date of publication of application: **19.09.2007**
(21) Application number: 05822505.3
(22) Date of filing: 27.12.2005
(51) Int. Cl.: F02B 23/06, F02D 13/02

(54) **DIRECT INJECTION DIESEL ENGINE**

(30) Priority: 05.01.2005 JP 2005000650
(71) Applicant: YAMAHA HATSUDOKI KABUSHIKI KAISHA, Iwata-shi, Shizuoka 438-8501 (JP)
(72) Inventor: TANAKA, Daijiro c/o YAMAHA HATSUDOKI KABUSHIKI, 4388501 (JP); ONDA, Naoki c/o YAMAHA HATSUDOKI KABUSHIKI, 4388501 (JP)
(74) Representative: Grünecker, Kinkeldey, Stockmair & Schwanhäusser Anwaltssozietät
(86) International application number: PCT/JP2005/023900
(87) International publication number: WO 2006/073091

(57) **Abstract**

A center cavity (13) made up of a circular recess is formed in a head (4a) of a piston (4). An injector is provided for injecting fuel into the center cavity. Sub-cavities (14) are formed to be connected to the center cavity on the periphery side of the head (4a). The injector is positioned to inject fuel to a border portion (17) between the sub-cavities (14) and the center cavity.

## Description

### [Technical Field]

This invention relates to a direct injection type of diesel engine provided with an injector for injecting fuel directly into a center cavity in the piston head.

### [Technical Background]

Conventionally, the direct injection type of diesel engine for the passenger car for example has been required of higher output and cleaner exhaust emissions. To meet such requirements, improvement in combustion was attempted in the past by forming a combustion chamber in the piston.

As a piston of this type, there is one with a round recess called the center cavity in the center (axial center) part of the piston head. The direct injection type of diesel engine having such a piston employs a constitution in which the injector is disposed so that its nozzle faces the interior of the center cavity of the piston near the top dead center to inject fuel to the inside wall of the center cavity.

As another conventional piston of this type, there is one in which the opening of the center cavity is formed with a smaller inside diameter than other part, with the opening formed in the so-called inside flange shape. Forming the opening part relatively narrow in this way is thought to improve combustion because a wide squish area is formed between the piston head and the cylinder head.
In the conventional diesel engines for automobile use, the pistons are either provided with no recess or, if provided, with a very shallow recess.
Incidentally, the inventor has not been able to find out any prior art literature closely related to this invention up to the time of submitting the application. Therefore, no information on prior art literature is disclosed.

### [Disclosure of the Invention]

### [Problems to be Solved by the Invention]

However, even the conventional direct injection type of diesel engine, in which either the piston is formed with the center cavity or the squish area is enlarged as described above, in order to be mounted on automobiles, is required of further improvement in output, fuel consumption, and purification of exhaust emissions. The conventional diesel engines for automobile use seem to be constituted with importance laid on rather purification of exhaust emissions, and the pistons are either provided with no recess or, if provided, with a very shallow recess. Therefore, with the conventional direct injection type of diesel engine for automobile use, it has been impossible to improve torque at low revolutions by elongating the valve overlap of intake and exhaust valves.

This invention has been made to meet the above demands. Therefore, the object of this invention is to provide a direct injection type of diesel engine that makes it possible to obtain further higher output and purify exhaust emissions while improving fuel economy.

### [Means for Solving the Problem]

The direct injection type of diesel engine according to this invention is a direct injection type of diesel engine including; a piston with a center cavity made up of a circular recess formed in its head, and an injector for directly injecting fuel into the center cavity, wherein sub-cavities are formed in the periphery side of the head and connected to the center cavity, and the injector is positioned to inject fuel toward a border portion between the sub-cavities and the center cavity.

The direct injection type of diesel engine according to Claim 2 is based on the direct injection type of diesel engine according to Claim 1, wherein the sub-cavities are formed in a recess on the periphery side of the piston head, facing the valve bodies of the intake and exhaust valves, in a shape similar to the valve body, deeper and radially greater than the recess.

The direct injection type of diesel engine according to Claim 3 is based on the direct injection type of diesel engine according to Claim 1, wherein an inside diameter of an opening of the center cavity is smaller than a inside diameter of an interior of the cavity.

The direct injection type of diesel engine according to Claim 4 is based on the direct injection type of diesel engine according to Claim 3, wherein a bottom of the center cavity is formed in a quasi conical shape convex toward a cylinder head and a bottom of the sub-cavity is formed at a nearly same height as an apex of the bottom of the center cavity.

The direct injection type of diesel engine according to Claim 5 is based on the direct injection type of diesel engine according to Claim 1, wherein an inside round surface of the ' center cavity is formed with a nearly constant inside diameter from the opening to the bottom.

The direct injection type of diesel engine according to Claim 6 is based on the direct injection type of diesel engine according to Claim 1, wherein a variable valve timing device for exhaust valve is provided to delay the exhaust valve closing time when the engine is in a low speed operation range so that the valve overlap is 60 degrees or greater in crank angle, and to advance the exhaust valve opening time when the engine is in transition from the low to a high speed operation range.

With the invention according to Claims 1 and 2, the combustion chamber is formed widely with the center cavity and the sub-cavities in the piston head. As a result, fuel is distributed in the center cavity and the sub-cavities. This makes it possible to almost completely burn fuel by the efficient use of relatively increased amount of air in the combustion chamber. Therefore, with the direct injection type of diesel engine according to this invention, a higher output is obtained while fuel economy is improved. The direct injection type of diesel engine according to this invention also makes it possible to accomplish exhaust emission purification by eliminating incomplete combustion to reduce the amount of black smoke produced.

The invention according to Claim 3 makes it possible to form a relatively wide squish area between the piston and the cylinder head. Therefore, the amount of air blowing out of the squish area immediately before the piston reaches the top dead center in the compression stroke is great, and combustion is further improved with this air.

The invention according to Claim 4 makes it possible to form the sub-cavity as deep as possible, resulting in the increase in the volume of the sub-cavity. As a result, this invention makes it possible to positively mix the air blowing out of the squish area at high speeds with fuel in both the center cavity and the sub-cavity, resulting in further improvement in combustion.
The invention according to Claim 5 makes it easy to form the center cavity and achieve cost reduction.

With the invention according to Claim 6, the valve overlap period is relatively long when the engine is in the low speed operation range. With this engine, the pressure in the intake passage during a valve overlap is higher than the negative pressure in the exhaust passage utilizing the exhaust pulsation effect, whether the intake device of the engine is of a turbo-supercharging type or a natural intake type. As a result, during the valve overlap, the pressure difference between the pressure in the intake passage (supercharge pressure or atmospheric pressure) and the pressure in the exhaust passage causes fresh air to flow through the intake passage into the combustion chamber so as to scavenge burned gas. The amount of fresh air inflow increases with the increase in the valve overlap. Therefore, the torque of the diesel engine of this invention at low speeds increases as the intake air amount is increased by making the overlap longer in low speed operation, as well as with the synergetic effect of combustion improvement by the presence of the sub-cavity.

The piston of the diesel engine of this invention has a sub-cavity formed sufficiently deeper than an ordinary recess. Therefore, in this diesel engine it is possible to increase the opening degree of intake and exhaust valves during a valve overlap, so that air flows smoothly.
On the other hand, when the engine is in the high speed operation range, the exhaust valve opening time becomes earlier and the amount of high pressure gas in the cylinder during the upward piston stroke is reduced. As a result, with this diesel engine, the exhaust pumping loss is reduced when the engine is in high speed operation, to make it possible to improve fuel economy and output.

### [Brief Description of Drawings]

Fig. 1 is a partial sectional view of the cylinder body of the direct injection type of diesel engine of this invention.
Fig. 2 is a plan view of the piston head.
Fig. 3 is an enlarged sectional view of the piston head.
Fig. 4A shows timing of opening and closing intake and exhaust valves in low speed operation.
Fig. 4B shows timing of opening and closing intake and exhaust valves in high speed operation.
Fig. 5 is a graph of a relationship between torque and engine revolution of the direct injection type of diesel engine of this invention.
Fi.6 is a graph of a relationship between air-to-fuel ratio, smoke amount, and engine revolution of the direct injection type of diesel engine of this invention.
Fig. 7 is a plan view of the piston head.
Fig. 8 is another plan view of the piston head.
Fig. 9 is still another plan view of the piston head.
Fig. 10 is still another plan view of the piston head.
Fig. 11 is still another plan view of the piston head.

### [Best Mode for Carrying out the Invention]

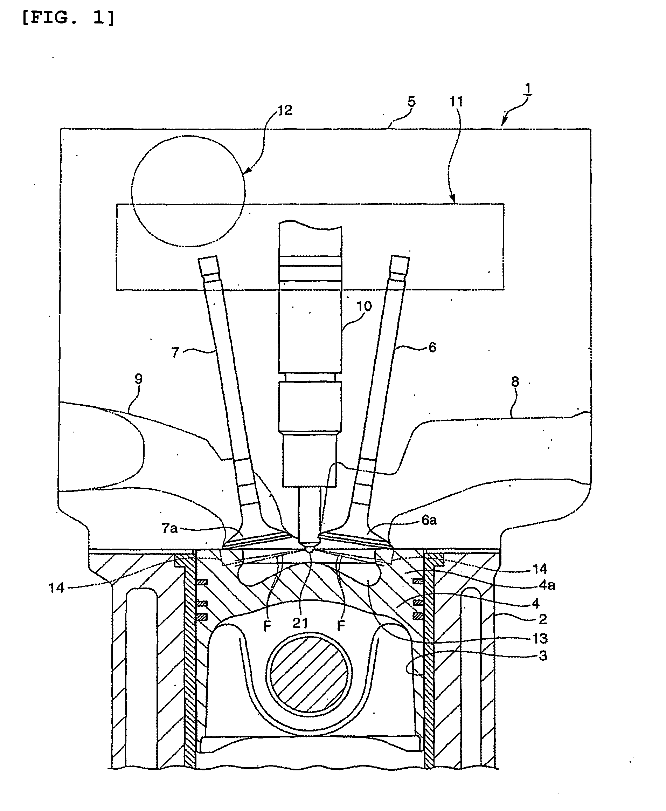

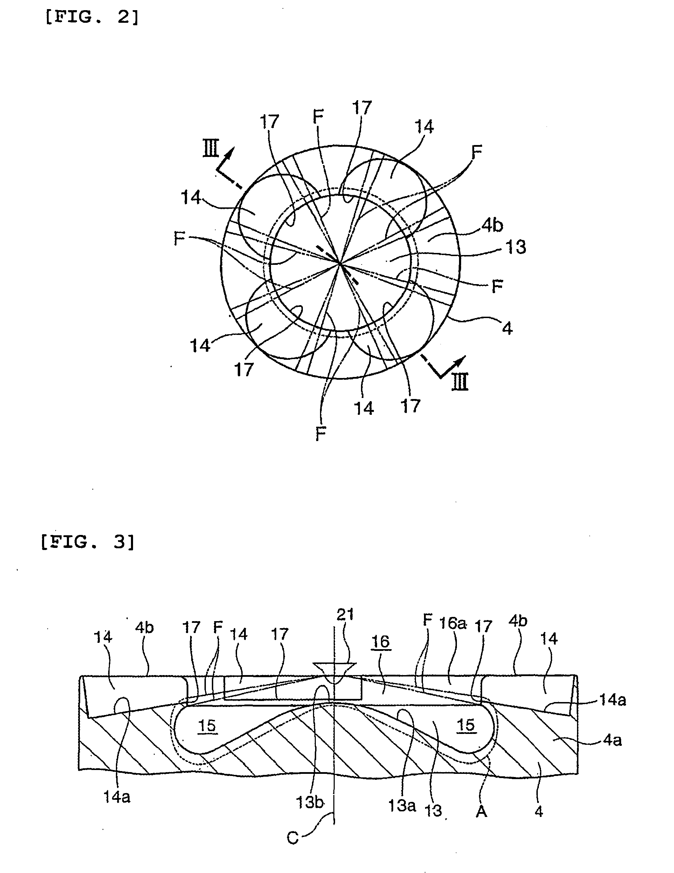

Details of a direct injection type of diesel engine as an embodiment of this invention are described below in reference to Figs. 1 to 6. Fig. 1 is a partial sectional view of the cylinder body of the direct injection type of diesel engine of this invention. The figure also shows intake and exhaust valves, an injector, and intake and exhaust ports, on the cylinder head side. Fig. 2 is a plan view of the piston head. Fig. 3 is an enlarged sectional view of the piston head, a section taken along the line III-III in Fig. 2.

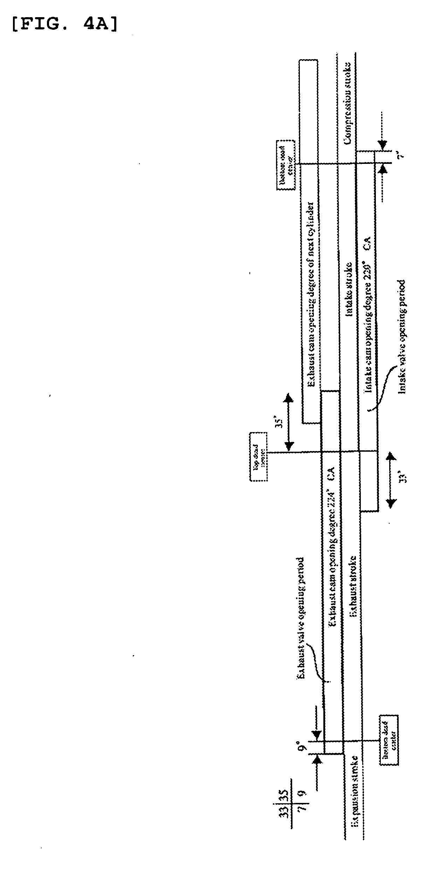

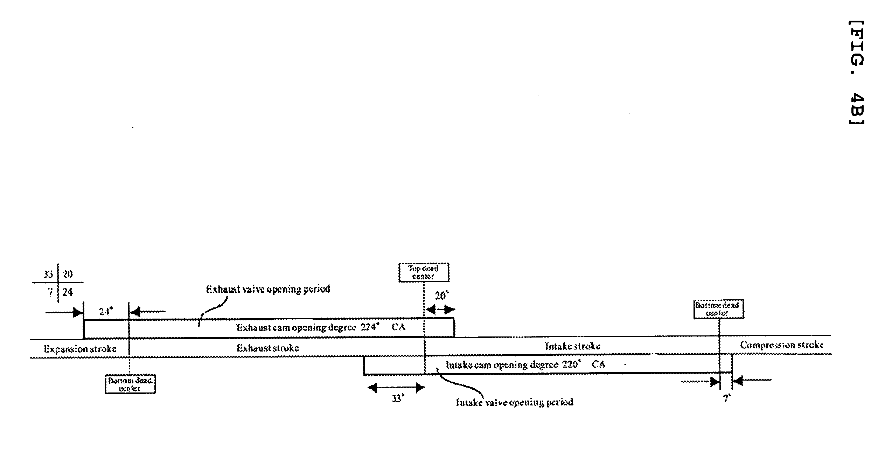

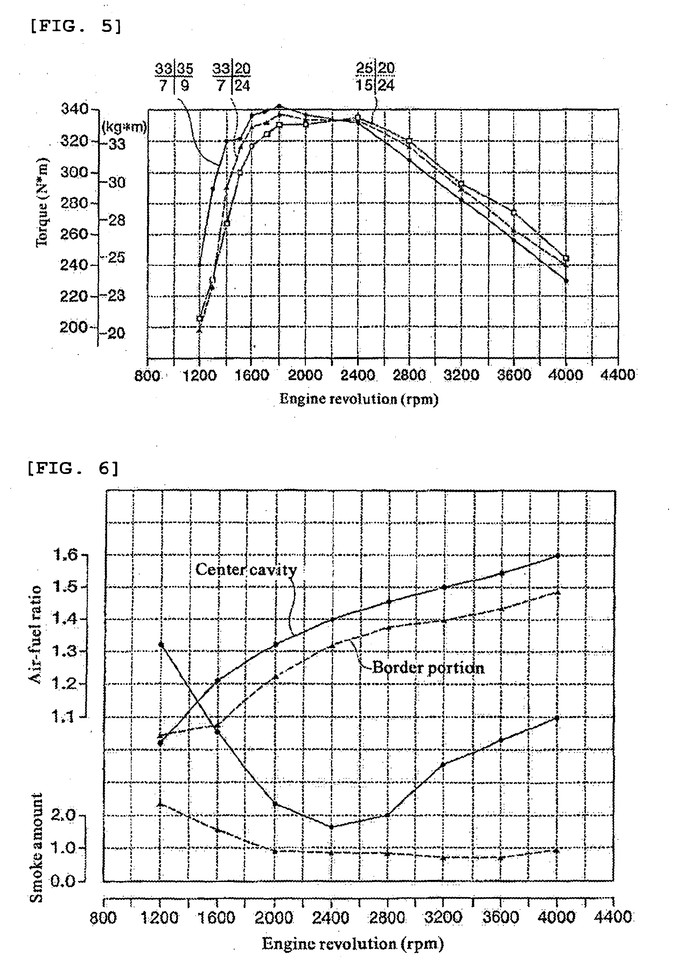

Fig. 4A shows timing of opening and closing intake and exhaust valves at low speed operation. Fig. 4B shows timing of opening and closing intake and exhaust valves at high speed operation. Fig. 5 is a graph of a relationship between torque and engine revolution of the direct injection type of diesel engine of this invention. Fi.6 is a graph of a relationship between air-to-fuel ratio, smoke amount, and engine revolution of the direct injection type of diesel engine of this invention.

In these figures, the reference numeral 1 indicates a part of the direct injection type of diesel engine as an embodiment of this invention. This diesel engine is of a water-cooled, multi-cylinder type to be mounted on automobiles, including: a cylinder body 2 with a plural number of cylinders in a lateral row, pistons 4 inserted for free motion within cylinder bores 3 of the cylinder body 2, and a cylinder head 5 attached to the cylinder body 2, etc.

On the cylinder head 5, two intake valves 6 and exhaust valves 7 are provided for each cylinder (one each of intake and exhaust valves is not shown), and intake passages 8 and exhaust passages 9 are formed to be opened and closed with these intake and exhaust valves 8 and 9. An injector 10 is attached to the cylinder head 5 on the cylinder axis. The intake and exhaust valves 6 and 7 are connected to a valve drive mechanism 11 having intake camshafts and exhaust camshafts (not shown). Although not shown, a turbocharger is connected to the downstream side of the exhaust passage 9 of the cylinder head 5. The exhaust passage 9, as is well known heretofore, employs the constitution of utilizing the exhaust pulsation effect. For example, the exhaust passage 9 may be constituted so that the pressure at the opening on the combustion chamber side is lower than that on the intake side during a valve overlap time.

The intake camshaft and exhaust camshaft are connected to a crankshaft (not shown) through a transmitting means and are rotated by rotation of the crankshaft transmitted through the transmitting means. A variable valve timing device 12 is interposed between the exhaust camshaft and the transmitting means in a torque transmitting system. The variable valve timing device 12 includes such a constitution that advances or delays the phase of the exhaust camshaft relative to the phase of the transmitting means when the exhaust camshaft rotates.

The variable valve timing device 12 used in this embodiment is the one that continuously changes the phase of the exhaust camshaft. As the variable valve timing device 12, a construction that advances or delays the phase of the exhaust camshaft by the so-called on-off operation may be used. As the variable valve timing device 12, another construction that changes individually opening time and closing time of the exhaust valve 7 may also be used.

The exhaust cam of the camshaft according to this embodiment is, as shown in Fig. 4, is formed so that the opening degree (crankshaft rotation angle during a period while the exhaust valve remains open) is 224 degrees. On the other hand, the opening degree of the intake cam is set to 220 degrees. The variable valve timing device 12 is constituted to change the phase of the exhaust camshaft rotation between delayed angle state shown in Fig. 4A and advanced angle state shown in Fig. 4B.

The variable valve timing device 12 is in the delayed angle state shown in Fig. 4A when the engine is in the low speed operation range, and moves to the advanced angle state shown in Fig. 4B continuously or by the so-called on-off operation while the operation range moves from the low speed operation range to the high speed operation range.
In the delayed angle state shown in Fig. 4A, the exhaust valve 7 opens when the piston 4 is at 9 degrees before the bottom dead center and closes at 35 degrees after the top dead center. The intake camshaft is formed so that the intake valve 6 opens when the piston 4 is at 33 degrees before the top dead center and the intake valve 6 closes at 7 degrees after the bottom dead center, whether in delayed angle state or advanced angle state.

In the advanced angle state shown in Fig. 4B, the exhaust valve 7 opens when the piston 4 is at 24 degrees before the bottom dead center and closes at 20 degrees after the top dead center. In other words, the variable valve timing device 12 of this embodiment advances or delays the exhaust camshaft rotation angle by 15 degrees between advanced angle state and delayed angle state.

In the head portion 4a of the piston 4 are formed, as shown in Figs. 2 and 3, a center cavity 13 located in the central area (around the axis of the piston 4) and sub-cavities 14 located in four positions on the periphery of the center cavity 13.
The center cavity 13 is a round recess centered on the axis C of the piston 4. The center cavity 13 is made up of a bottom portion 15 with its inside round surface formed in an arcuate shape in vertical section and an opening portion 16 with its inside diameter constant and extending in the axial direction of the piston 4. The inside diameter of the opening portion 16 is formed to be smaller than the maximum diameter of the bottom portion 15 (inside diameter within the center cavity 13). The bottom 13a of the center cavity 13 is formed in quasi conical shape convex toward the cylinder head 5.

The sub-cavities 14 in this embodiment are recesses provided in parts of the head 4a of the piston 4 facing the valve bodies 6a and 7a (See Fig. 1) of the intake and exhaust valves 6 and 7. The sub-cavities 14 are formed, in parts of the recess facing the valve bodies 6a and 7a of the intake and exhaust valves 6 and 7, deeper and greater in radial direction than the recess and exhibiting a similar shape to a part of the valve bodies 6a and 7a. Specifically, the opening shape of the sub cavities 14, as shown in Fig. 2, is formed in a shape into which the valve bodies 6a and 7a of the intake and exhaust valves 6 and 7 may be inserted deep, as if in a loose fit state. The bottom surface 14a of the sub-cavities 14 is formed, as shown in Fig. 3, at about the same height as the apex 13b of the bottom 13a of the center cavity 13.

Forming the sub-cavities 14 in the head 4a of the piston 4 as described above results in that the bottom surface 14a of each sub-cavity 14 is connected to the inside round surface 16a of the opening 16 of the center cavity 13 through a border portion 17 of arcuate shape in a plan view.
In the piston 4 of this embodiment, as shown in Fig. 2, a flat surface is formed to constitute the bottom of the squish area between the adjacent sub-cavities 14 on the periphery side of the piston head surface 4b.

It is conceivable that forming the sub-cavities 14 in the head 4a of the piston 4 as described above may result in decrease in compression ratio. However, the piston 4 of this embodiment prevents decrease in compression ratio by reducing the volume of the center cavity 13. In other words, in the piston 4 of this embodiment, a specified value of compression ratio is maintained by forming the inside surface of the center cavity, conventionally formed in the shape indicated with the broken line A in Fig. 3, in the shape indicated with the solid line in the figure, so that the cavity volume is reduced.

The injector 10, as shown in Fig. 1, is secured to the cylinder head 5 in the state in which a fuel injection nozzle 21 provided at the distal end projects from the cylinder head 5 toward the cylinder body 2. The fuel injection nozzle 21 injects in eight directions, to be described later, as shown in double-dotted chain lines in Figs. 1 to 3, in a conical shape of a small apex angle. Each direction of fuel injection is, as shown in Figs. 1 to 3, is directed toward the border portion 17 between the center cavity 13 and the sub-cavity 14.

The fuel injection nozzle 21 of this embodiment, as shown in Fig. 2, employs a constitution in which fuel is injected to two positions of each of the four border portions 17, as seen in the axial direction of the piston 4, between the center cavity 13 and the four sub-cavities 14. In other words, this nozzle 21 injects fuel in directions that divide the periphery of the piston 4 into eight as seen in the axial direction of the piston 4 or in directions directed to two positions of each of the four border portions 17.

Injecting fuel from the fuel injection nozzle 21 to the border portions 17 as described above results in that the injected fuel is distributed into the center cavity 13 and the sub-cavities 14. The time at which the injector 10 injects fuel is set to be immediately before the piston 4 reaches the top dead center in the end period of a compression stroke. As a result, most of the fuel injected through the nozzle 21 strikes the border portions 17 and is distributed to the center cavity 13 and the sub-cavities 14.
The direct injection type of diesel engine 1 of this embodiment, like diesel engines in general, is constituted to control output by the fuel injection amount injected from the injector 10.

In the direct injection type of diesel engine 1 of the above-described constitution, fuel is injected from the injector 10 in the end period of the compression stroke toward the border portions 17 of the piston 4. The injected fuel is distributed into the center cavity 13 and the sub-cavities 14, and ignited in the state of being mixed with air within both the cavities 13 and 14.

In the direct injection type of diesel engine 1 of this embodiment, the center cavity 13 and the sub-cavities 14 constitute a wide combustion chamber and that fuel is distributed into the center cavity 13 and the sub-cavities 14. As a result, this direct injection type of diesel engine 1 is capable of almost completely burning fuel by efficiently using relatively increased amount of air in the combustion chamber. Because combustion is improved as described above, this direct injection type of diesel engine 1 makes it possible to obtain higher output while realizing low fuel consumption. Being free from incomplete combustion reduces the amount of black smoke produced.

The amount of black smoke produced, as a result of tests, as shown in Fig. 6, has proved to clearly decrease in comparison with the case in which fuel is injected only into the center cavity 13. In Fig. 6, the solid lines represent the case in which fuel is injected into only the center cavity 13 of the piston 4 of this embodiment; and the broken lines, the case in which fuel is injected to the border portions 17. As is clear from Fig. 6, when fuel is injected to the border portions 17, in spite of lower (thick) air-to'-fuel ratio in comparison with the case in which fuel is injected into the center cavity 13, the amount of smoke (black smoke) produced has proved to be less. From these data too, it is known that combustion in the direct injection type of diesel engine 1 occurs with good efficiency.

When the piston 4 reaches the top dead center in a compression stroke, air flows at a high speed from the squish area formed between the piston 4 and the cylinder head 5 into the center cavity 13 and the sub-cavity 14. With the piston 4 of this embodiment, because the inside diameter of the opening 16 of the center cavity 13 is formed small and a wide squish area is formed, the amount of air blowing out of the squish area is great, and this air makes it possible to improve combustion further. The bottom surface 14a of the sub-cavity 14 is formed in a deep position to be nearly at the same height as the apex 13b of the bottom 13a of the center cavity 13 for the purpose of increasing the volume of the sub-cavity 14. As a result, as described above, it is possible to positively mix air blowing out of the squish area at high speeds with fuel within the sub-cavity to further improve combustion.

In the direct injection type of diesel engine 1 of this embodiment, as described above, when fuel burns, goes on to an expansion stroke, and the piston 4 in the end period of the subsequent exhaust stroke reaches a position at 33 degrees before the top dead center, the intake valve 6 opens. The period of valve overlap in which the intake valve 6 and the exhaust valve 7 are open simultaneously becomes relatively long (68 degrees in Fig. 4A in this example) when the engine is in a low speed operation range and relatively short (53 degrees in Fig. 4B in this example) when the engine is in a high speed operation range.

In the direct injection type of diesel engine 1 of this embodiment, pressure in the intake passage 8 during a valve overlap is higher than the negative pressure in the exhaust passage 9 utilizing the exhaust pulsation effect, whether the intake device of the engine is of a turbo-supercharging type or natural intake type. As a result, during the valve overlap, the pressure difference between the pressure in the intake passage 8 (supercharge pressure or atmospheric pressure) and the pressure in the exhaust passage 9 causes fresh air to flow through the intake passage 8 into the combustion chamber so as to scavenge burned gas.

The amount of fresh air inflow is greater when the valve overlap is longer. Therefore, as this diesel engine 1 is adapted to increase the amount of intake air by elongating the valve overlap in low speed operation, torque at low speeds is increased with the synergetic effect of providing the sub-cavity 14 as described above.

Further, because the sub-cavity 14 deeper than the recess is formed in the piston 4 shown in this embodiment, it is possible to set great opening degree of the intake and exhaust valves 6 and 7 during the valve overlap, so that air flow occurs smoothly.
Further, the diesel engine of this embodiment, in spite of the valve overlap exceeding 60 degrees, unlike gasoline engines, is free from adverse effects on the amount of black smoke emission and fuel economy at partial load. In gasoline engines in general, a longer valve overlap causes exhaust gas to flow back into the intake system under negative pressure to deteriorate combustion. However, because there is no throttle valve in diesel engines, negative pressure does not occur in the intake system, and so no reverse flow of exhaust gas occurs into the intake system. The combustion in the diesel engine is the so-called diffused combustion with ignition occurring at dispersed positions within the combustion chamber. Therefore, even if reverse exhaust gas flow into the intake system occurs in the diesel engine, unlike in the gasoline engine in which combustion occurs with uniform mixture, such an internal EGR does not become a problem.

The torque of the diesel engine 1 varies as indicated with solid lines in Fig. 5 in the low speed operation state in which the valve overlap is the longest as described above or as shown in Fig. 4A in the state in which the exhaust valve 7 opens at 9 degrees before the bottom dead center and closes at 35 degrees after the top dead center. In Fig. 5, the broken line indicates the change in torque in the state of the shortest valve overlap or the state in which the exhaust valve 7 opens at 24 degrees before the bottom dead center and closes at 20 degrees after the top dead center. The single-dotted chain line indicates the torque change in the state in which the valve overlap is made the shortest and further the intake camshaft is replaced with one that delays the rotation phase by 8 degrees (one that further shortens the overlap) in comparison with the intake camshaft shown in this embodiment.

As shown in Fig. 5, the direct injection type of diesel engine 1 of this embodiment produces relatively great torque by setting the valve overlap long when the revolution is lower than about 2200 rpm. When the revolution is higher than 2200 rpm and the valve overlap is long, the torque becomes relatively small. Therefore, the variable valve timing device 12 of this embodiment employs a constitution in which the phase angle of the exhaust camshaft is delayed in low speed operation of engine revolution of about 2200 rpm or lower, and the phase angle of the exhaust camshaft is advanced in high speed operation of engine revolution of about 2200 rpm or higher. Incidentally, the variable valve timing device 12 may be made to have hysteresis in its action so that the variable valve timing device 12 does not repeat moving between advanced and delayed angle state when the engine revolution changes up and down around the 2200 rpm.

When the diesel engine 1 reaches the high speed operation range and the variable valve timing device 12 causes the camshaft phase to move from the delayed angle side shown in Fig. 4A to the advanced angle side shown in Fig. 4B, the opening time of the exhaust valve 7 becomes earlier, so that an exhaust gas is discharged into the exhaust passage 9 from the middle of expansion stroke. When this occurs, the pressure in the cylinder relatively lowers when the stroke moves from expansion to exhaust, so as to reduce pumping loss, improve fuel economy in high speed operation, and increase output.

Incidentally, when an attempt is made, without using the variable valve timing device 12, to elongate the valve overlap while opening the exhaust valve 7 at an earlier time by making the exhaust cam opening longer than 224 degrees, for example 256 degrees, the simultaneous opening period of the exhaust valve 7 of other cylinder becomes longer during the valve overlap. Therefore, when such a constitution is employed, exhaust gas of other cylinder blows down during the valve overlap. In other words, exhaust gas of a high pressure flows in when the exhaust valve starts opening, and intake air cannot flow smoothly into the combustion chamber, undesirably resulting in a remarkable reduction in low speed torque.

As the direct injection type of diesel engine 1 of this embodiment uses a cam with a small opening period of the exhaust valve 7 of 224 degrees in combination with the exhaust variable timing device 12, it is possible to make as short as possible the period in which exhaust valves 7 of two cylinders are open simultaneously (See Fig. 4A). Therefore, it is possible to minimize the amount of exhaust inflow from other cylinder into the exhaust passage 9 due to exhaust blow-down in other cylinder. Using the exhaust cam with the small opening degree is also one of factors of improving the intake efficiency as described above.

The direct injection type of diesel engine 1 of this embodiment makes it possible to lower the engine revolution at which a maximum torque is produced down to about 1500 rpm by changing the valve overlap period. Producing the maximum torque at low revolutions in this way makes it possible to shorten the time lag (turbo lag) of the engine revolution rising to a revolution at which effect of a turbocharger is obtained efficiently, and to obtain high acceleration performance.

In the direct injection type of diesel engine 1 of this embodiment, as the intake ability at low revolutions is improved, supercharged pressure need not be increased, and a turbo-compressor may be used on the lower pressure side of a surge curve (generally showing the limit of use of a turbo-compressor) showing changes in the supercharged pressure versus delivery air amount of the turbo-compressor. This makes it possible to improve performance of the turbo-compressor at high speeds and also improve reliability of blades.

While the above embodiment is shown as an example in which the inside diameter of the opening 16 of the center cavity 13 is formed smaller than other parts, the center cavity 13 may also be formed with its inside round surface diameter almost constant from the opening to the bottom. Employing this constitution simplifies the form of the center cavity 13, so that it is formed easily and the manufacturing cost of the piston 4 is reduced.

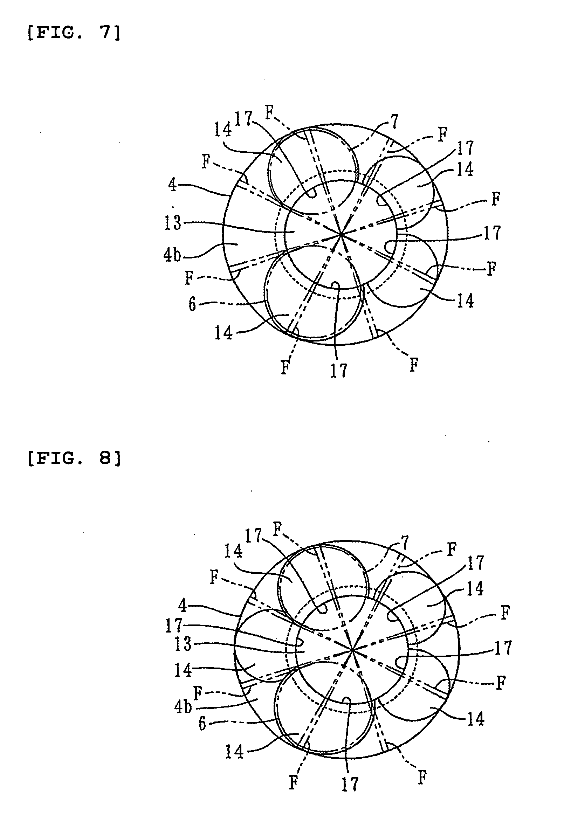

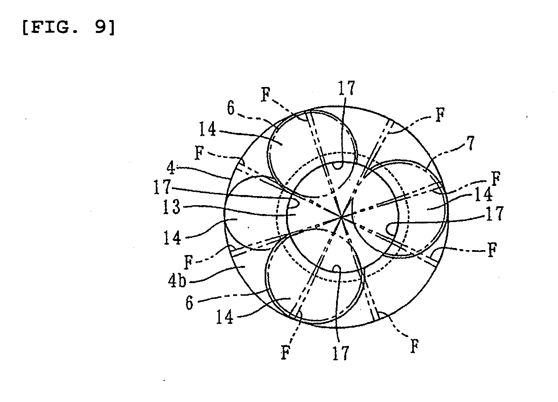

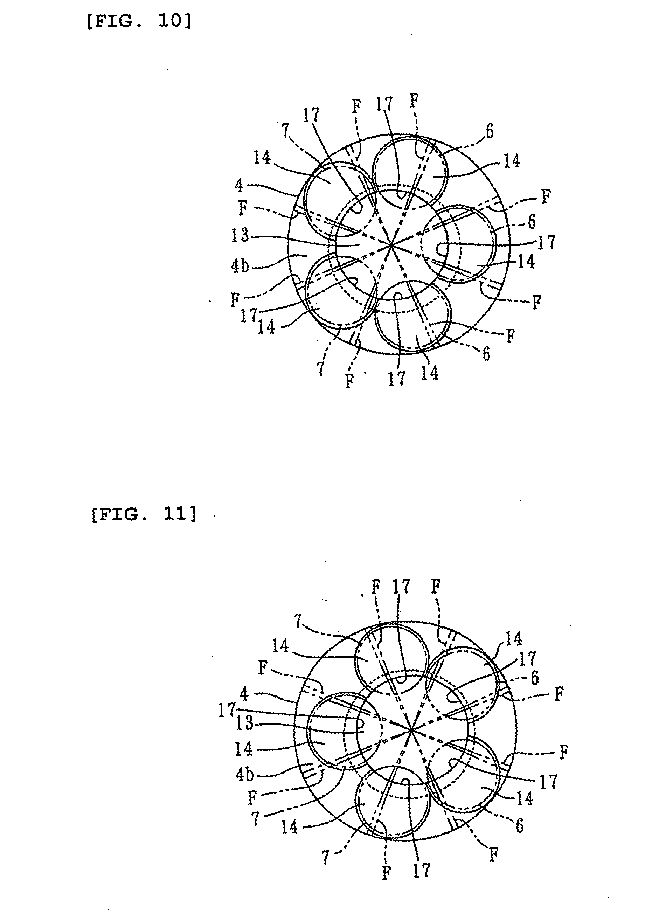

While a multi-cylinder, direct injection type of diesel engine is described above as an example of embodiment, this invention may be applied to a single-cylinder , direct injection type of diesel engine. Besides, while the direct injection type of diesel engine of the above embodiment is shown with two each of intake and exhaust valves for each cylinder, the number of intake and exhaust valves is not limited to the above. For example, it is also possible to apply this invention to: a diesel engine shown in Figs. 7 and 8 in which one each of intake and exhaust valves are provided for each cylinder, to a diesel engine shown in Fig. 9 in which two intake valves 6, 6 and one exhaust valve 7 are provided for each cylinder, to a diesel engine shown in Fig. 10 in which three intake valves 6, 6, 6 and two exhaust valves 7, 7 are provided for each cylinder, and to a diesel engine shown in Fig. 11 in which two intake valves 6, 6 and three exhaust valves 7, 7, 7 are provided for each cylinder.

In case one each of intake and exhaust valves are provided, like the form shown in Figs. 1 to 3, the sub-cavities 14 are preferably provided in four positions in the head 4a of the piston 4 for the purpose of improving combustion. In that case, it results in that the sub-cavities 14 are also formed in parts of the head 4a of the piston 4 that do not face the intake and exhaust valves 6 and 7. As shown in Fig. 7, in case the intake and exhaust valves 6 and 7 are provided only on one side of the head 4a of the piston 4, the sub-cavities 14 may be provided also in parts of the head 4a of the piston 4 that is on the opposite side of the intake and exhaust valves 6 and 7, and that do not face the intake and exhaust valves 6 and 7.

In case the diesel engine is provided with two intake valves 6, 6 and one exhaust valve 7 for each cylinder, as shown in Fig. 9, a sub-cavity 14 may also be formed in a part of the head 4a of the piston 4 facing an area between two intake valves 6, 6.
In case each cylinder is provided with three intake valves 6 and two exhaust valves 7, or with two intake valves 6 and three exhaust valves 7, as shown in Figs. 10 and 11, sub-cavities 14 are formed in parts of the head 4a of the piston 4 facing respectively the intake and exhaust valves 6 and 7.

Besides, the above-described embodiment is an example of using the variable valve timing device 12 adapted to change the exhaust camshaft rotation phase. However, in the process of realizing the direct injection type of diesel engine according to this invention, a variable valve timing device may be used that makes it possible to change separately opening time and closing time of the exhaust valve 7. When a variable valve timing device of such a constitution is used, a constitution may be employed in which only the exhaust valve closing time is delayed while holding the exhaust valve opening time unchanged when the engine is in a low speed operation range.

### [Industrial Applicability]

The direct injection type of diesel engine according to this invention may be used as a vehicle engine for automobiles like passenger cars, buses, trucks, and other vehicles, and as an industrial engine for generators or the like.

## Claims

1. A direct injection type of diesel engine comprising;
a piston with a center cavity made up of a circular recess formed in its head, and
an injector for directly injecting fuel into the center cavity, wherein
sub-cavities are formed in the periphery side of the head and connected to the center cavity, and
the injector is positioned to inject fuel toward a border portion between the sub-cavities and the center cavity.

2. The direct injection type of diesel engine of Claim 1, wherein
the sub-cavities are formed in a recess on the periphery side of the piston head, facing valve bodies of intake and exhaust valves, in a shape similar to the valve body, deeper and radially greater than the recess.

3. The direct injection type of diesel engine of Claim 1, wherein
an inside diameter of an opening of the center cavity is smaller than an inside diameter of an interior of the cavity.

4. The direct injection type of diesel engine of Claim 3, wherein
a bottom of the center cavity is formed in a quasi conical shape convex toward a cylinder head and a bottom of the sub-cavity is formed at a nearly same height as an apex of the bottom of the center cavity.

5. The direct injection type of diesel engine of Claim 1, wherein
an inside round surface of the center cavity is formed with a nearly constant inside diameter from the opening to the bottom.

6. The direct injection type of diesel engine of Claim 1, further comprising a variable valve timing device for exhaust valve, wherein
the variable valve timing device delays the exhaust valve closing time when the engine is in a low speed operation range so that the valve overlap is 60 degrees or greater in crank angle, and advances the exhaust valve opening time when the engine is in transition from the low to a high speed operation range.
